(19)

Europäisches
Patentamt
European
Patent Office
Office européen
des brevets

(11) **EP 2 446 790 A1**

(12) **EUROPEAN PATENT APPLICATION**

(43) Date of publication:
**02.05.2012 Bulletin 2012/18**

(51) Int Cl.:
*A47J 31/20* *(2006.01)*

(21) Application number: **10189066.3**

(22) Date of filing: **27.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Koninklijke Philips Electronics N.V.**
**5621 BA Eindhoven (NL)**

(72) Inventors:
• **De Jong, Gerrit, J.**
**5600 AE, Eindhoven (NL)**
• **De Haas, Rogier, E.**
**5600 AE, Eindhoven (NL)**

(74) Representative: **Damen, Daniel Martijn**
**Philips**
**Intellectual Property & Standards**
**P.O. Box 220**
**5600 AE Eindhoven (NL)**

(54) **Semi-automatic tea maker**

(57)      Tea maker (100), comprising a controller (332) operably connected to a heating element (222) for heating water in a water compartment, a temperature sensor (224), a tea filter presence sensor (226) for detecting the insertion of a tea filter in the water compartment, and user notification means, the controller being configured to heat water in the water compartment to an initial steeping temperature; to detect whether the water has been heated to the initial steeping temperature; to notify a user that the water has been heated to the initial steeping temperature, and that steeping may be initiated by insertion of the tea filter; and once the user has been notified to insert the filter, to maintain the temperature of the water within a certain range of the initial steeping temperature until either a certain waiting period lapses, or insertion of the tea filter is detected within said waiting period.

Fig. 1

## Description

The present invention relates to electric tea making appliances, and more in particular to a semi- automatic tea maker.

BACKGROUND

WO 2009/109,011-A1 (Siu) discloses a semi-automatic tea maker. The tea maker is able to heat water contained in a vessel to a variety of user-selectable brew temperatures, prompt a user to initiate a tea brewing operation (by lowering tea leaves into the water) when the water is at the selected temperature, prompt for the termination of the tea brewing process when a user-selectable brewing duration has passed, and maintain the water at a drinking temperature that is lower than the brew temperature thereafter.

Although the tea maker according to WO'O11 may facilitate the making of tea, or at least provide a reasonable degree of user control over the tea brewing process, its functionality leaves to be desired.

It is therefore an object of the present invention to overcome one or more drawbacks associated with the tea maker according to WO'011, as detailed below.

SUMMARY OF THE INVENTION

A first drawback associated with the tea maker according to WO'011 relates to its behavior immediately following the action of heating the water to the desired brew temperature. Once the water in the vessel of the tea maker reaches this brew temperature, an alert or indicator lets a user know that it is appropriate to lower the tea into water. The user, however, may be momentarily occupied or otherwise unable to respond to the alert or indicator. The tea maker according to WO'011 does not provide for any particular response to handle such a situation. In case the tea maker would stop heating the water upon alerting the user, it might leave a user that is slow to respond with water too cold to properly brew the tea. On the other hand, in case the tea maker would indefinitely heat the water, it may never stop consuming electric energy, even though the thought of brewing tea may have been long forgotten by the user.

To overcome this problem, a first aspect of the present invention is directed to a tea maker that comprises a water compartment; a tea filter that is at least partly insertable into the water compartment; a heating element, configured to heat water contained in said water compartment; a temperature sensor, configured to generate a reference signal reflecting a temperature of the water contained in said water compartment; a tea filter presence sensor, configured to detect insertion of the tea filter into the water compartment; user notification means; and a controller that is operably connected to the heating element, the temperature sensor, the tea filter presence sensor and the notification means. The controller is configured to heat water contained in the water compartment in accordance with a predetermined temperature/time profile that is at least partly defined by an initial steeping temperature; to detect whether the water has been heated to the initial steeping temperature in accordance with the predetermined temperature/ time profile; to notify a user by means of the notification means that the water has been heated to the initial steeping temperature in accordance with the temperature/time profile and that steeping may be initiated by insertion of the tea filter into the water compartment; and once the user has been notified to insert the filter, to maintain the temperature of the water within a certain range of the initial steeping temperature until either a certain waiting period lapses, or insertion of the tea filter is detected by means of said tea filter presence sensor within said waiting period.

The tea maker may thus keep the water at or close to, and preferably within 5°C of, the selected initial steeping temperature for a certain waiting period, starting at the point in time at which the tea maker notifies the user that the tea filter (containing the tea leaves) may be inserted into the water compartment to commence steeping. The waiting period may preferably not be too long, and safeguard that the tea maker effectively shuts itself down once it appears to have been forgotten. On the other hand, it may preferably not be too short either, allowing a user to resume the tea brewing process even after temporarily attending to different matters. Accordingly, in a preferred embodiment the waiting period during which the controller is configured to maintain the temperature of the water within a certain range of the initial steeping temperature, may be no more than 60, and preferably no more than 30 minutes, e.g. 5-15 minutes. The controller may be fitted with a timer or countdown counter to track the lapse of the waiting period. When the waiting period lapses without prior detection of insertion of the tea filter, , the controller may stop the heating element from further heating the water and/or shut down the tea maker altogether.

A second drawback embodied by the tea maker according to WO'011 lies in the fact that a user may accidentally or purposefully 'overfill' the vessel with water. In such a case, the water level may reach the base of a spout connected to the water compartment, or even higher. In particular when the temperature is set to a boiling temperature of the water, i.e. typically 100°C, the spout may spit out virtually boiling droplets of water during heating. Subsequently pouring the hot tea from the overfilled vessel may additionally lead to an irregular stream of splashing liquid. Both the spitting and the splashing of the hot tea may give rise to the risk of scalds, which is obviously undesirable.

To overcome this problem, the controller of the tea maker may be configured to determine, during heating the water to the initial steeping temperature, an increment in the temperature of the water over a certain time interval of heating; to determine using said temperature increment, the duration of the observed time interval of heating and data regarding a specific heat capacity of water and a dissipative power of the heating element, an amount of water contained in the water compartment; to compare the determined amount of water to a maximum water amount-reference value; and in case the determined amount of water is greater than the maximum water amount-reference value, to stop heating the water.

The amount of heat/energy Q required to raise the temperature of a mass of m kilograms of water by $\Delta T$ degrees Celsius is dependent on the specific heat capacity c of water, which is about 4.18 Joule/gram°Celsius. The time $\Delta t$ it takes to heat the mass of water by $\Delta T$ degrees Celsius is furthermore dependent on the dissipative power P of the heating element used to supply the heat. Mathematically, the relation between these variables may be expressed as:

$$Q = P \cdot \Delta t = c \cdot m \cdot \Delta T \qquad (1)$$

The controller of the tea maker may be programmed with knowledge of the values of P and c. Using an internal timer to monitor the lapse of a representative period of heating time $\Delta t$, e.g. 10-50 seconds, and measuring the increment in water temperature $\Delta T$ that occurs during this period of heating by means of the temperature sensor, it may calculate the amount of water contained in the water compartment, either in units of mass (e.g. kilograms), units of volume (e.g. liters; obtainable from m by dividing it by the density of water per liter), or any other suitable unit. The controller may subsequently compare the calculated amount of water with a pre-programmed reference value that represent the maximum, water compartment-specific amount of water that can be heated and poured safely. In case it finds that the amount of water contained in the water compartment exceeds the safe maximum, it may stop the heating of the water, and notify the user.

Instead of or in addition to an overfill-protection, the tea maker according to the present invention may include an underfill-protection. After all, an underfill of the vessel may damage the tea maker due to overheating of the heating element that is unable to give off its heat.

In one embodiment of the tea maker, the controller may thus be configured to determine, during heating the water to the initial steeping temperature, an increment in the temperature of the water over a certain time interval of heating; to determine using said temperature increment, the duration of the observed time interval of heating and data regarding a specific heat capacity of water and a dissipative power of the heating element, an amount of water contained in the water compartment; to compare the determined volume of water to a minimum water volume-reference value; and in case the determined volume of water is smaller than the minimum water volume-reference value, to stop heating the water.

A third drawback of the tea maker according to WO'011 concerns the manner in which it heats water to a selected brewing temperature: whenever a brewing temperature lower than 100°C (212°F) is selected, the water is heated to the selected temperature without boiling it. Thermostatic control over the water temperature prevents the water in the vessel from exceeding the brew temperature.

It is known that boiling tea water for too long may deplete the water's oxygen content. And since the oxygen dissolved in the water may be considered crucial to the tea developing its full flavor, using water that has boiled for too long to brew tea is not recommendable. However, using unboiled water to brew tea may also be advised against in many parts of the world, due to the possibility of the water containing disease-causing germs. In addition, using unboiled water is may result in tea scum on top of a cup of freshly brewed tea.

To overcome these problems, the temperature/time profile according to which the water is to be heated may be defined to include a brief period of boiling the water prior to reaching the initial steeping temperature. In executing said temperature/time profile, the controller may then heat the water to its boiling point before notifying a user that the water has been heated to the initial steeping temperature. The brief period during which the temperature water maintained its boiling point may typically be in the range of 1-30 seconds.

According to an elaboration of the invention, the controller may be configured to start counting a predetermined steeping time upon detection of insertion of the tea filter in the water compartment, and, upon expiry thereof, to control the notification means to notify the user that steeping has been completed and the tea is ready for consumption.

Once the controller detects the insertion of the tea filter in the water compartment, the heating phase of the tea brewing processes ends and the steeping phase starts. The steeping phase may have a pre-determined, tea type specific duration, here referred to as the steeping time, which may be counted by the controller. When the steeping time expires, the tea brewing process is complete, and the tea is ready for consumption.

From the foregoing, it will be clear that the initial steeping temperature is the temperature of the water in the water compartment at the start of the steeping phase. It is known that the optimal (initial) steeping temperatures may vary for different types of tea. Black tea, for example, may preferably be brewed at a water temperature close to 100°C, while green tea may be best brewed at a temperature in the range of 70-80°C. A consequence of these relatively high steeping temperatures is that the freshly brewed tea, at the end of the steeping process, may be relatively hot, often too hot to drink. To promote the ready drinkability of freshly brewed tea, the controller of the tea maker may preferably be configured not to heat the water during steeping. That is, from the point that the tea filter is inserted into the water compartment, and steeping of the tea commences, the controller may preferably refrain from heating the water, until the predetermined steeping time has lapsed. This allows the water to cool slightly during steeping, such that, at the end of the steeping process, the brewed tea has a temperature that is at, or at least closer to, a safe and pleasant drinking temperature. Another benefit of refraining from heating during the steeping phase is that sugary content of the tea is less likely to caramelize against heated parts of the tea maker.

It is noted that although the underfill and overfill protection functionality been described in the context of a tea maker that is configured to maintain water at or close to the initial steeping temperature prior to starting the steeping phase, this functionality may be implemented in tea makers without this latter feature.

Accordingly, it is understood that the present text also discloses a tea maker comprising a water compartment; a heating element, configured to heat water contained in said water compartment; a temperature sensor, configured to generate a reference signal reflecting a temperature of the water contained in said water compartment; and a controller that is operably connected to the heating element and the temperature sensor. The controller may be configured to determine, during heating the water to the initial steeping temperature, an increment in the temperature of the water over a certain time interval of heating; and to determine using said temperature increment, the duration of the observed time interval of heating and data regarding a specific heat capacity and a dissipative power of the heating element, an amount of water contained in the water compartment. In a tea maker featuring overfill protection functionality, the controller may further be configured to compare the determined amount of water to a maximum water amount-reference value; and in case the determined amount of water is greater than the maximum water amount-reference value, to stop heating the water. In a tea maker featuring an underfill protection, the controller may alternatively or additionally be configured to compare the determined volume of water to a minimum water volume-reference value; and in case the determined volume of water is smaller than the minimum water volume-reference value, to stop heating the water. A tea maker including underfill and/or overfill functionality may be combined with any tea maker features or embodiments described in this text.

These and other features and advantages of the invention will be more fully understood from the following detailed description of certain embodiments of the invention, taken together with the accompanying drawings, which are meant to illustrate and not to limit the invention.

BRIEF DESCRIPTION OF THE DRAWINGS

Fig. 1 is a schematic cross-sectional side view of an exemplary tea maker according to the present invention, including a vessel and a power base;
Fig. 2 is a schematic exploded view of the power base of the tea maker shown in Fig. 1, illustrating its layered composition;
Fig. 3. is a schematic top view of the power base of the tea maker shown in Fig. 1, illustrating its user interface panel;
Fig. 4. is a schematic cross-sectional side view of a capacitive button of the interface panel (Fig. 4A), and a projection display of the interface panel (Fig. 4B);
Fig. 5 is a table, schematically illustrating in cross-sectional side views of the capacitive buttons and the projection display of the interface panel, different constructive embodiments in case a wood top layer is used; and
Fig. 6 is a graph illustrating a number of tea type specific temperature/time profiles that may be associated with the brewing process symbols on the user interface panel shown in Fig. 2.

DETAILED DESCRIPTION

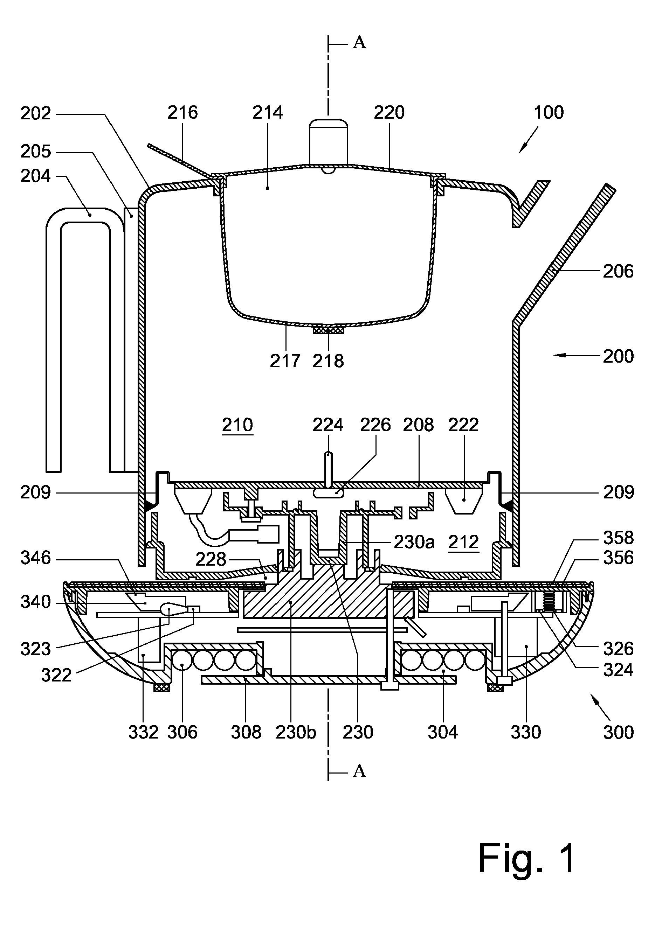

Fig. 1 is a schematic cross-sectional side view of an exemplary tea maker 100 according to the present invention. The tea maker 100 may comprise two main, detachably connectable components: a vessel 200 and a power base 300.

The vessel 200 may include a main body 202. In the embodiment of Fig. 1, the main body 202 is depicted as a single-walled structure. It is contemplated, however, that a different embodiment of the tea maker 100 may feature a vessel 200 having a double-walled main body 202, in particular to improve thermal insulation of the interior of the vessel. In either case, the main body 202 may be provided with a handle 204 for managing it. The handle 204 may be connected to the main body 202 through a body of thermally insulative material 205 to prevent excessive warming of the handle during use. A watertight partition 208 may divide the interior of the vessel 200 into a water compartment 210 and a lower compartment 212. The water compartment 210 may extend between the top of the vessel 200 and the watertight partition 208, whereas the lower compartment 212 may extend between the watertight partition and the underside of the vessel. A flexible bridge 209, e.g. a relatively thin annular slab of metal, may be used to connect, e.g. by welding, the water tight partition 208 to an inner side or wall of the main body 202, so as to accommodate thermal expansion and/or contraction of the different parts during operation.

The water compartment 210 may be accessible via a central opening 214 in the upper side of the vessel 200 that is be coverable by a hinged or detachable lid 220. The vessel 200 may also provided with a spout 206 that allows water to be poured out from the water compartment 210.

The opening 214 may be shaped to receive a removable tea filter 216, which may include an at least partly liquid permeable, for example meshed, basket 217 that can be lowered into the water compartment 210. The basket 217 may be made of any suitable material, but is preferably made of stainless steel. The mesh or alternative liquid permeable features of the basket 217 may be fine enough to contain tea leaves during steeping, and for example include openings having a diameter in the range of 0.1-0.5 mm. The filter 216 may also be fitted with a permanent magnet 218, which may be attached to or incorporated into bottom part of the basket 217. This may allow the magnet's 218 presence, and hence tea filter's 216 presence, in the water compartment 210 to be detected by a reed switch 226 provided in the lower compartment 212.

The lower compartment 212 may accommodate a for example arc-shaped electric heating element 222 that may be attached to the underside of the partition 208, which forms the bottom of the water compartment 210. The heating element 222 may have a dissipative power output suitable for heating a filled up water compartment 210 within about 2-5 minutes, e.g. 1 to 3 kW. To promote the transfer of heat from the heating element 222 to the water in the water compartment 210, the partition 208 may be made of a material with a good thermal conductivity, such as aluminum or copper, allowing it to act as a heat diffuser.

The partition 208 may include a central opening through which a temperature sensor 224, e.g. an NTC thermistor, extends from the lower compartment 212 into the water compartment 210. A seal, e.g. a silicone O-ring, may be provided to ensure the watertightness of the partition 208 at the temperature sensor's position. Alternatively, a temperature sensor 224 may be located below/against an underside of the partition 208, so as to measure the temperature in the water compartment 210 through partition 208, which eliminates the need for water sealing.

The lower compartment 212 may further accommodate a reed switch 226 that is configured for cooperation with a permanent magnet 218 provided on or incorporated in the removable tea filter 216. The reed switch 226 and the magnet 218 may be disposed such that the reed switch is actuated by the magnetic field of the magnet when the tea filter 216 is placed in the vessel 200, giving it the function of a proximity sensor or, more specifically, a tea filter presence sensor. To promote the detectability of the tea filter 216 using only a single reed switch 226 and a single magnet 218, the former may be attached to a central portion of the watertight partition 208, and the latter may be disposed in a central bottom area of the basket 217. This may eliminate the sensitivity of the detection of the tea filter 216 to the angular position in which it is placed in the water compartment 210 (the angular position seen relative to a central, vertically extending axis A of the tea maker 100). In particular when the reed switch 226 is fixed to the partition 208, it may be enclosed in a thermally insulating casing, e.g. a silicone tube, that spaces it apart from both the partition and the heating element 222 sufficiently to prevent overheating.

Although a magnet 218 and a reed switch 226 may form a reliable and cost-effective tea filter presence sensor, it is contemplated that an alternative embodiment of the tea maker 100 may include a different (i.e. non-magnetic) type of sensor for detecting insertion or placement of the tea filter 216 in the water compartment 210 of the vessel 200, such as an optical sensor, e.g. a light source in combination with a photo detector, or a mechanically operated sensor, e.g. a pressure switch. In principle, any sensor suitable for the stated purpose may be used.

A central recess 228 in a bottom of the vessel 200 may grant access to a vessel portion 230a of an electric, for example 5-pole, connector 230. The vessel portion 230a of the connector 230 may be mounted to a bottom side of the partition 208, and be configured for functional engagement with a complementary power base portion 230b of the connector. When the vessel 200 rests on the power base 300, and the two connector portions 230a, 230b are in mutual engagement, power and data signals may be exchanged between the power base and the vessel through the connector 230. It is understood that all electrical components in the vessel 200 (including the electric heating element 222, the temperature sensor 224 and the reed switch 226) may be electrically connected to the vessel portion 230a of the electric connector, although wires to this end have been omitted from the drawings for reasons of clarity.

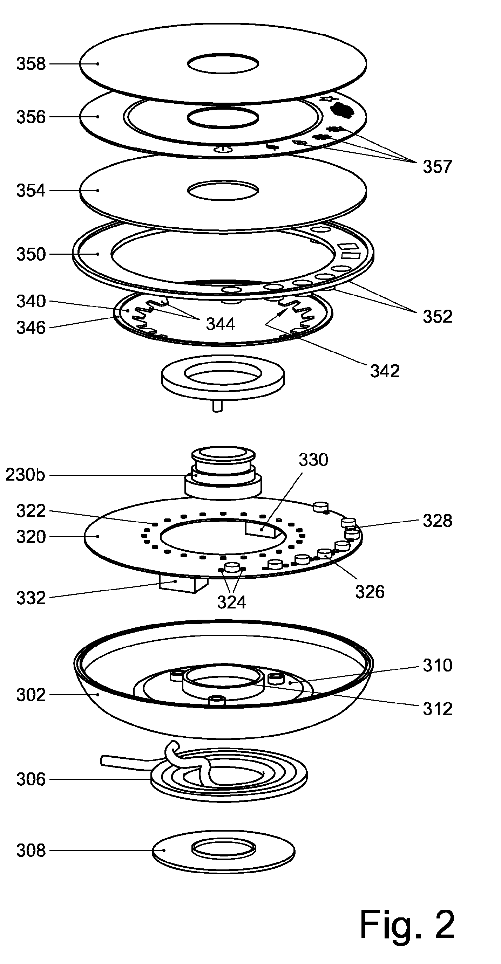

The construction of the power base 300 is best illustrated with reference to both Fig. 1 and Fig. 2, the latter showing a schematic exploded view of the power base that illustrates its generally layered composition.

The power base 300 may include a main body 302. In the depicted embodiment, the main body 302 is a generally bowl-shaped, injection molded plastic shell. An underside of the main body 302 may be shaped to define an annular recess 304 for storing a power cord 306. To prevent a wound and stored power cord 306 from dropping out of the recess 304, a radially inner portion of the annular recess 304 may be covered by a bottom cap 308 that may be screwingly fixed to the main body 302. The main body 302 of the power base 300 may further include a mounting plateau 310. The mounting plateau 310 may include a centrally disposed, upstanding annular ridge 312 on which the power base portion 230b of the electrical connector 230 may be installed. A more radially outward portion of the mounting plateau may support an annular printed circuit board (PCB) 320. The PCB 320 may mechanically support and electrically connect a number of components, including:

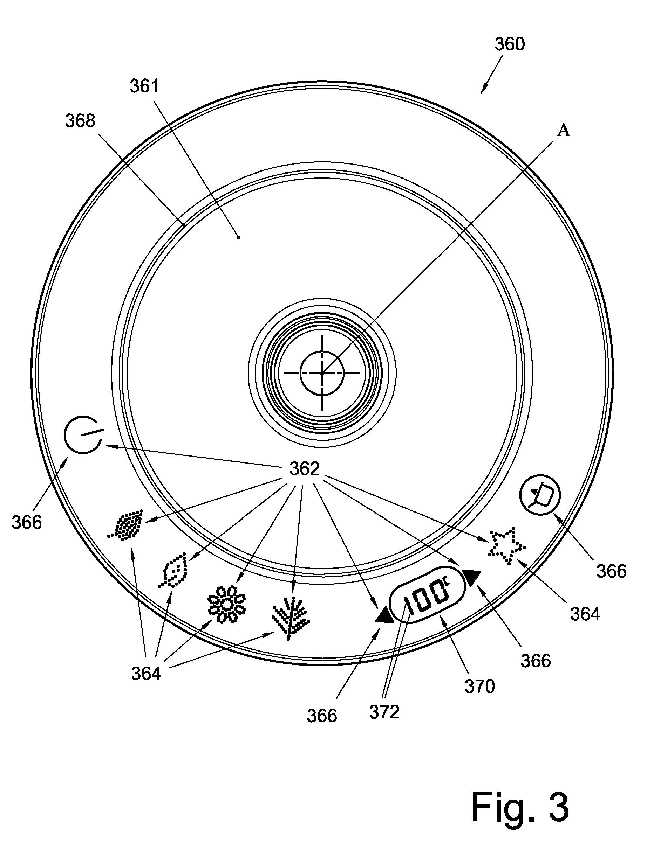

- a plurality of independently controllable first illumination means 322, in particular light emitting diodes (LEDs). The first illumination means 322 may preferably be equidistantly spaced along a circular or otherwise shaped path surrounding the central opening of the annular PCB 320. As will be elucidated below, the first illumination means 322 may cooperate with an annular light guide 340, to be disposed on top of the PCB 320, in order to form a illuminable ring-shaped brewing progress indicator 368 of an interface panel 360 of the tea maker 100; the interface panel 360 and progress indicator 368 are best shown in Fig. 3. The LEDs of the first illumination means 322 may be coupled and arranged to the PCB 320 such that their light 323, as illustrated in Fig. 1, is emitted in a substantially radially outward direction, which may be substantially parallel to the plane of the illuminable ring-shaped brewing progress indicator 368. The first illumination means 322 may comprise LEDs of a single color or LEDs of multiple colors, possibly in the form of multi-color LEDs. The exemplary embodiment of the tea maker 100 illustrated in Figs. 1-2 includes twenty-four first illumination means 322 in the form of LEDs; it is contemplated, however, that different embodiments of the tea maker 100 may include a different, smaller or larger, number of first illumination means 322.

- a plurality of capacitive sensors 326, one for each capacitive button 362 of the interface panel 360. In the depicted embodiment the capacitive sensors 326 are shown as capacitive coils, one for each of the eight capacitive buttons 362.
- a plurality of independently controllable second illumination means 324, in particular LEDs, disposed adjacent the capacitive sensors 326 and configured to illuminate the respective associated capacitive button 362. In the depicted embodiment, two LEDs 324 are disposed on opposite sides of each capacitive sensor 326.
- a plurality of independently controllable third illumination means 328, in particular LEDs, for illuminating a projection display 370 that, as such, is best shown in Fig. 3. In the depicted embodiment, the projection display 370 includes one two-segment and two seven-segment indicators, which together are capable of indicating numeric values from 0 to 199. Altogether, the third illumination 328 means may thus be comprised of sixteen LEDs. In case the projection display includes additional indications, e.g. a '"°C"-indication or a "min."- indication for temperature and time, respectively, each of these extra indications may be provided with its own, dedicated third illumination means/LED(s).
- a loudspeaker 330 or other suitable electroacoustic transducer, capable of generating sound to notify a user.
- a central controller 332. The controller 332 may be operably connected to all the electric components in the power base 300, and when the vessel 200 is placed on the power base such that the two connector portions 230a, 230b are in mutual engagement, also to the electric components in the lower compartment 210 of the vessel 200. In addition, the controller 332 may typically include a processor or an integrated circuit capable of executing a certain program or series of instructions, so as to enable it to perform the actions described in this text. The construction and use of integrated circuits in is well known in the art, and will not be elaborated upon.

As is clearly visible in Fig. 2, the PCB 320 may be topped with a series of annular (i.e. having a central opening for encompassing the base portion 230b of the electric connector 230), more or less disc-shaped components. In upward order these components include: a light guide 340, a focusing mask 350, a transparent body 354, a masking layer 356 and a diffusion layer 358.

The light guide 340 may comprise a ring of an optically transmissive material, such as glass or a transparent plastic, e.g. polycarbonate or polymethyl methacrylate (better known as acrylic glass, or PMMA). The ring may have a wavy or sinuate inner circumferential edge 342, with a number of equidistantly spaced, radially inwardly extending protrusions 344, one for each of the first illumination means 322. In an assembled condition, the radially inwardmost edges or tips of the protrusions 344 may abut the light-emitting surfaces of the first illumination means 322, allowing them to couple light into the light guide 340. An upper, outermost edge of the light guide may form a light escape strip 346. To allow light, coupled into the light guide 340 by the first illumination means 322, to escape from the guide via the light escape strip 346, the exterior surface of the strip may be suitably treated, for example by abrasion, bending, or notching. Such treatment may frustrate the total internal reflection at the exterior surface boundary of the strip 346, and thus permit at least a fraction of the light incident on the boundary to be transmitted therethrough.

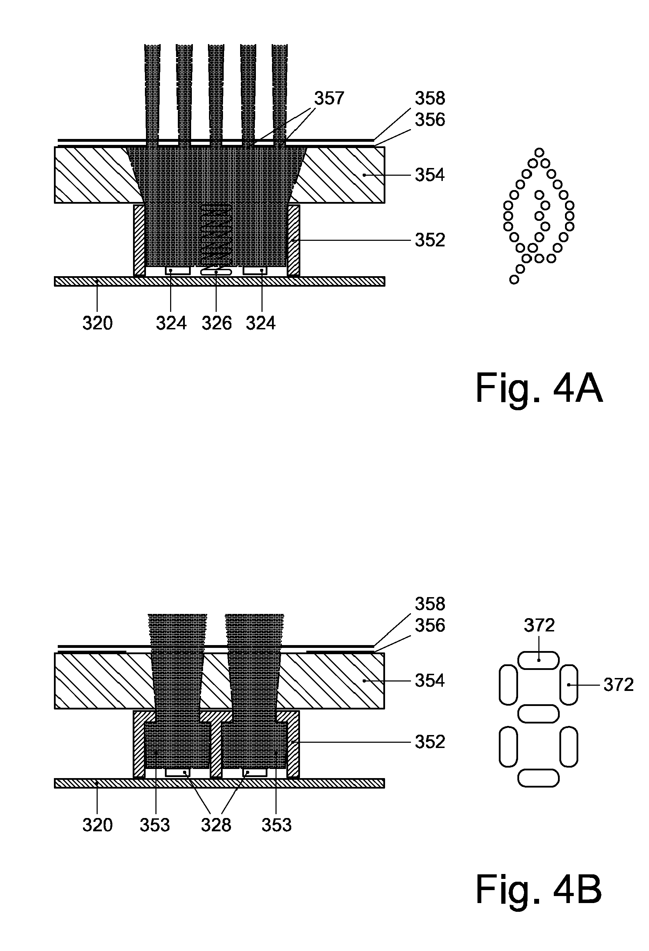

The focusing mask 350, which may have an inner opening sufficiently large to encompass the light guide 350, may include a ring with a number of opaque, for example black-colored light containers 352 attached thereto (see also Figs. 4A,B). A light container 352 may be associated with either a capacitive button 362, or with a segment indicator of the projection display 370. Each of the light containers 352 associated with a capacitive button 362 may be generally jacket shaped, so as to form a light chamber in which both the second illumination means 324 and the capacitive sensor 326 of the respective button can be enclosed (see Fig. 4A). The light containers 352 associated with the projection display 370 may comprise a number of substantially vertically extending slots 353. Each of the slots 353 may define a single segment 372 of the projection display, and be uniquely associated with one or more of the third illumination means 328 (see Fig.4B). The upper edges of the walls of the light containers 352, in particular those associated with the projection display 370, may extend a little inward (shown in Fig. 4B), so as to form a well-defined opening in the light-emitting end of the light container 352 that helps shape the cone of light that can escape therefrom. In fact, such inwardly extending edges may fulfill the function of a mask, and locally replace the masking layer 356 to be discussed below. The light containers 352 may be relatively high, e.g. about 10 mm, to ensure that light emitted by the second and first illuminations means 324, 328 at the base of the light containers, in a direction that is not at least approximately perpendicular to the plane of the PCB 320 on which they are mounted, is absorbed by the black-colored walls of the containers.

On top of the focusing mask 350 may come the transparent body 354, the masking layer 356 and the diffusion layer 358. Although Fig. 2 shows these items as separable parts, they may preferably be integrated. That is, the transparent body 354 may serve as a mechanical carrier, on an upper side of which the relatively thin masking layer 356 and light diffusion layer 358 may be applied, in that order.

The transparent body 354 may include an annular disc made of a transparent and mechanically strong material, such as glass or poly-carbonate. The disc may have a thickness on the order of millimeters. Its upper side may be coated with a thin, opaque masking layer 356. The masking layer 356 may have a thickness on the order of tens of micrometers, and be applied to the transparent body using a conventional coating technique, such as screen printing. At the locations associated with the ring-shaped brewing progress indicator 368, the capacitive buttons 362 and the projection display 370, the masking layer 356 may comprise transparencies 357 that, alone or in groups, define illuminable symbols 364, 366 or segments 372 of the interface panel 360. In the depicted embodiment, the entire area of the masking layer 356 associated with the projection display 370 is transparent (instead of multiple areas, each associated with single segment 372), which is possible because the masking function for the projection display 370 is performed by the inwardly extending top edges of the walls of the light container 352 of the display (see Fig. 4B). The masking layer 356, in turn, may be covered with a light diffusion layer 358. The primary function of the light diffusion layer 358 is that of a projection screen, on which the patterns of the masking layer 350 can be imaged when backlit by the second and third illumination means 324, 328 provided on the PCB 320. The light diffusion layer 358 may further act as a wear resistant, preferably watertight varnish. To serve both purposes, the light diffusion layer 358 may be composed of a conventional lacquer comprising light scattering pigment particles of, for example, titanium dioxide or barium sulphate. In order to facilitate sharp projections and prevent complete opacity, the light diffusion layer may generally have a thickness smaller than about 0.1 mm.

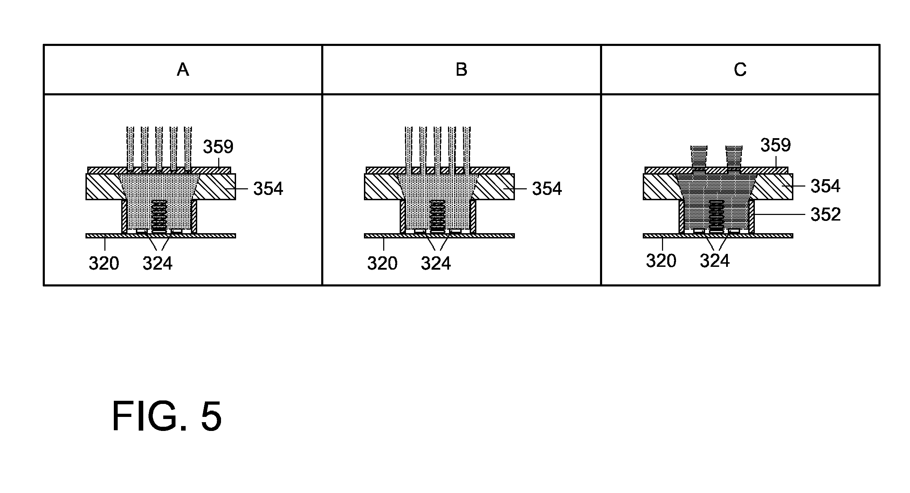

In one embodiment of the tea maker 100, the diffusion layer 358 may be made of wood; in such an embodiment the wooden diffusion layer is referred to with reference numeral 359. Wood is a natural material with a calming aura that fits with the naturalness and culture of tea, and may therefore be a material of choice. It is, however, also opaque. Figs. 5A and 5C schematically illustrate how symbols 364, 366 of capacitive buttons 362 may nevertheless be made visible on the user interface panel 370. It is understood that, although Fig. 5 depicts the construction of capacitive buttons 362, it is, mutatus mutandis, equally applicable to the segments 372 of the projection display 370 and other indicators, such as a illuminable brewing progress indicator 368, on the user interface panel 360. The wooden diffusion layers 359 of Figs. 5A and 5C may both be manufactured by providing a slab of wood or wood veneer, for example having a thickness on the order of millimeters, and selectively milling or otherwise reducing it to a thickness on the order of several tenths of millimeters, e.g. 0.1-0.4 mm, at the locations corresponding to illuminable portions of the symbols 364, 366, the segments 372 and/or the brewing progress indicator 368. At thicknesses of tenths of millimeters, the wood becomes translucent, such that light emanated by the first, second and/or third illumination means 322, 324, 326 may shine through it, and the wood may act as a diffusion layer.

In Fig. 5A, the thickness of the wooden slab has been selectively reduced by removing material from the front or outer side thereof, while in Fig. 5C, material has been removed from the back or inner side. Both embodiments offer the advantage that the diffusion layer 359 remains a closed layer, having no perforations through which moisture may easily access the power base 300. However, in case it is desired that the diffusion layer has a smooth or flat front surface without notches or recesses, such as in the case of a 'dead panel' user interface, the embodiment of Fig. 5C may be preferred.

With reference to the layered construction of the power base 300, it is noted that in embodiments comprising a wooden diffusion layer, the masking layer 356 shown in Fig. 2 may be omitted from the construction of the tea maker 100 or be disposed on the other side (i.e. the bottom side) of the transparent body 354. In some embodiments, in particular those not featuring a masking layer 356 provided against the bottom or inner side of the wooden diffusion layer 359, a translucent white layer may be attached to the back side of the wooden diffusion layer in order to enhance the visibility of the illuminated symbols 364, 366, segments 372 or brewing progress indicator 368. Such a translucent white layer may be padprinted, lacquered, screen printed or otherwise provided on the back side of the wooden diffusion layer 359.

The transparent body 354 itself may be manufactured and attached to the wooden diffusion layer 359 by means of insert molding. In the embodiment of Fig. 5C, the resin used for the insert molding process may at least partially fill up the recesses in the back side of the wooden diffusion layer 359, and thus provide mechanical back support for the thinned, translucent portions thereof.

For comparison, Fig. 5B illustrates an alternative embodiment that may be manufactured in a generally similar manner as the embodiments of Figs. 5A and 5C, except that (through)holes or perforations may be milled in the slab of wood. The construction of Fig. 5B may also be used for the symbols 366, 364, the segments 372 and/or the brewing progress indicator 368, but may generally be less preferred because small perforations may prove difficult to fill with resin during insert molding of the transparent body 354 as air may be entrapped in the cavities. In addition, it will be clear that, due to the perforations, the wooden top layer in the construction of Fig. 5B may not actually serve as a diffusion layer. This implies that it is less suitable for creating 'dead panel' user interfaces, since the perforations of the wood would be visible on the interface panel 360 at all times.

Fig. 3 is a schematic top view of the power base 300 of the tea maker 100, illustrating its user interface panel 360. It will be clear from the foregoing that the user interface panel 360 may be a so-called 'dead panel'. That is, its visible surface may not include any permanent marks, and the symbols 364, 366, segments 372 and brewing progress indicator 368 shown in Fig. 3 may be visible only when actively illuminated by the internal first, second and third illumination means 322, 324, 328. Accordingly, the user interface panel 360 may appear blank in case the tea maker 100 is unplugged from the mains.

The user interface panel 360 may feature a number of juxtaposed capacitive buttons 362, each provided with its own symbol 364, 366. From left to right the panel 360 depicted in Fig. 3 includes: a power on/off button, four pre-programmed brewing program selection buttons (to the left of the projection display 370), two display input buttons (one on either side of the display), and one programmable brewing program selection button (to the right of the projection display 370). To the right of the latter brewing program selection button, the user interface panel 360 includes a filter placement indicator, which is not a button but merely an illuminable icon.

The power on/off button, the two display input buttons and the filter placement indicator may each be provided with a functional symbol 366. The functional symbol 366 of the power on/off button may preferably be conventional for ease of recognition by the user, and may, if desired be padprinted or laser engraved in or on the diffusion layer 358, 359, or made like a burn mark by a laser process, instead of being provided in the structure of the masking layer 356 as described above. The same applies to the two display input buttons, which in the embodiment depicted in Fig. 3 are provided with functional symbols in the form of solid left resp. right pointing triangles. Their purpose is to enable a user to manipulate the figures shown on the display. The brewing program selection buttons may each be provided with a brewing program symbol 364. As will be explained below, the controller 332 of the tea maker 100 may assign a tea type specific brewing program to each of these symbols 364. The brewing program symbols 364 themselves may preferably be non-numeric and non-alphabetic, so as to reduce a user's perception that he is dealing with a complicated technological device. The use of pictorial symbols may also reduce the manufacturing costs involved in producing the tea maker 100 for different localities. For example, in the case of alphabetic labels, a button 362 might have to mention "Black tea" in England, "Schwarztee" in Germany, and "Thé noir" in France, while in the case of a pictorial symbol, the button might be the same for all these countries. Furthermore, the brewing program symbols 364 may preferably be comprised of separate, approximately circular dots, setting them apart from the continuous-line symbols typically found on conventional apparatus.

Besides the capacitive buttons 362 and the filter placement indicator, the user interface panel 360 may also feature a projection display 370 and a ring-shaped brewing progress indicator 368. The area of the user interface panel 360 bounded by the brewing progress indicator 368 may define a vessel reception location 361 for receiving the vessel 200, as shown in Fig. 1.

The brewing progress indicator 368 may be illuminated by the first illumination means 322, whose light may be successively transmitted through the light guide 340, the transparent body 354, the respective transparencies 357 in the masking layer 356, and onto the light diffusion layer 358. The construction of the light guide 340 may preferably be such that the brewing progress indicator 368 may be considered to be comprised of a series of connected transparent sections, each of which may be lit independently of the others by switching the associated first illumination means 322 on or off. Although the brewing progress indicator 368 may in principle have any suitable shape, it may preferably be substantially circle-part-shaped or ring-shaped. As such, it may extend around a center of the user interface 360, e.g. along a perimeter of an inner edge of the user interface panel 360, at a distance therefrom. The inner diameter of the brewing progress indicator 368 may preferably be greater than an outer diameter of (at least the bottom of) the vessel 200. In such an embodiment, the brewing progress indicator 368 may surround a vessel 200 placed on the power base 300 at the vessel reception location 361, such that, in a fully illuminated state, it is still at least partly (typically for about one half) visible to a user at any position next to the tea maker 100.

Now that the construction of the tea maker has been described in some detail, attention is invited to its operation.

A brewing process to be executed by the tea maker 100 may typically comprise the following series of steps:

    1. Brewing program selection
    2. Heating water to selected initial steeping temperature

3. Tea filter placement
4. Steeping tea for selected steeping time
5. Notifying user that tea is ready

Brewing program selection involves the choice of a tea brewing program by the user, wherein 'brewing program' refers to a certain temperature/time profile to be followed by the water contained in the water compartment 210 of the vessel 200 during the tea brewing process. A temperature/time profile may typically involve at least two consecutive phases: a heating phase (step 2) and a steeping phase (step 4). During the heating phase, the water in the vessel 200 may be heated to an initial steeping temperature. Heating of the water may include boiling it, but this is not necessary. For example, in case the initial steeping temperature is set to be 80°C, water may be heated from room temperature up to 80°C directly, e.g. along an approximately straight temperature/time-path. Alternatively, the water may first be boiled and then be cooled or left to cool to 80°C. Once the water has attained the set initial steeping temperature, the steeping phase of the tea may be initiated by placement of the tea filter (step 3). The duration of the steeping phase is given by the steeping time. When the steeping time has elapsed, the tea is ready for consumption (step 5).

A temperature/time profile outlined above may include three defining parameters that may differ for different types of tea: the initial steeping temperature (a temperature value), a pre-steep boiling flag that controls whether or not the water is heated to its boiling point before steeping (a Boolean value, true of false), and the steeping time (a time value). The controller 332 of the tea maker 100 may assign a value for one or more of these parameters to a brewing program symbol 364 of the user interface panel 360, so as to define the brewing program associated therewith.

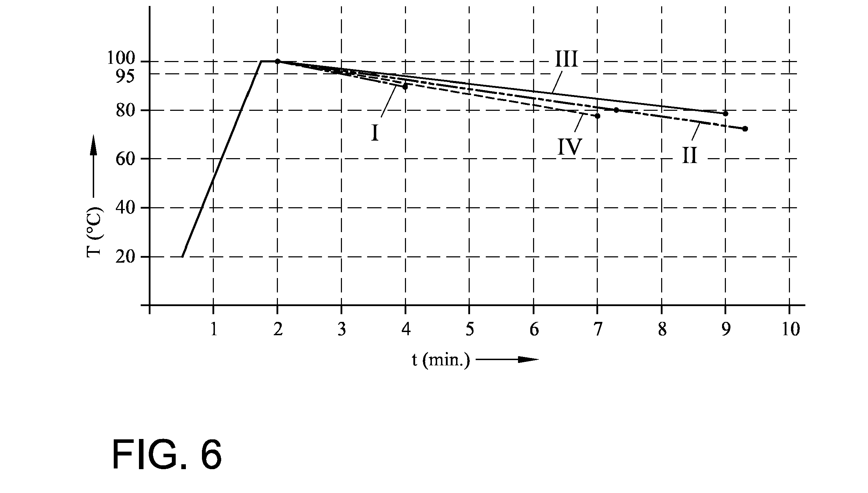

Fig. 6 illustrates four temperature/time profiles I, II, III, IV that may be associated with the four pre-programmed brewing program selection buttons of the user interface panel 360 shown in Fig. 3. The leftmost brewing program selection button, featuring a brewing program symbol in the form of a fully illuminated tea leaf, may for example be associated with a brewing program for black tea. The controller 332 may accordingly assign the values 100°C, true, and 2 minutes to the initial steeping temperature, the pre-steep boiling flag and the steeping time, respectively. The second brewing program selection button from the left, featuring a symbol in the form of a edge-lit tea leaf, may likewise be associated with a brewing program for green tea, and the controller 332 may successively assign the values 80°C, true, and 2 minutes to the aforementioned variables, in that order. The third and fourth symbols from the left, having the shape of a flower and a rooibos plant respectively, may in turn be associated with brewing programs for respectively herbal tea and rooibos tea. The controller 332 may assign the values 100°C, true, and 7 minutes to the former brewing program symbol, and the values 100°C, true and 5 minutes to the latter. Fig. 6 graphically illustrates these assignments. It is understood that the above-described assignments are exemplary only, and that, in principle, any combination of values may be assigned to any brewing process symbol.

To enable the selection of a brewing program by the user, the controller 332 may suitably illuminate the brewing program selection symbols 364 in the user interface panel 360 by powering the associated second illumination means 324. The controller 332 may, for example, first illuminate all symbols 364, in order to present the user with all available options, and then keep only a selected symbol illuminated to provide the user feedback of the selection. The controller 332 may, in addition or alternatively, provide feedback to the user by making symbols 364 blink, by changing their colors (if the second illumination means provide for light of different colors), or by generating sounds through the loudspeaker 330 to accompany a selection.

Once a user 'presses' a brewing program selection button to select the brewing program of his choice, the controller 332 may load the corresponding brewing parameters from its memory. In case the user pressed a pre-programmed brewing program button, the controller 323 may immediately proceed to step 2 of the brewing process. Alternatively it may wait for a confirmation before starting the heating phase (e.g. through pressing the selected button again). In case the user pressed the user-programmable brewing program selection button, the controller may present the selectable parameters of the brewing program to the user via the projection display 370 for optional review. When the user has entered his preferences, the controller 332 may proceed to step 2 of the brewing process.

To heat the water in the vessel 200 to the initial steeping temperature in accordance with the temperature/time profile associated with the selected brewing program, the controller 332 may selectively switch the electric heating element 222 on and off. Alternatively, the controller 332 may, for example, vary the power supplied to the heating element 222, or employ a more sophisticated PID-controller strategy. When the heating element 222 is switched on, it may generate heat that is transferred to the water, causing its temperature to rise. When the heating element 222 is switched off, heat may slowly leak from the vessel 222, causing the water temperature to drop. The water temperature itself may be measured by means of the temperature sensor 224. Accordingly, the controller 332 may control and monitor the progress of the heating phase, and once the selected initial steeping temperature is reached, it may notify the user that the tea filter 216 may be placed (step 3 of brewing process), e.g. by suitably illuminating the filter placement indicator on the user interface panel 360.

As a safety feature, the heating step may include an under- and/or overfill protection. An underfill situation occurs when there is no or a too small amount of water in the water compartment 210 during the heating phase. In the event an underfill remains undetected, it may result in an overheated heating element 222 due to the fact that the element is insufficiently capable to give off its heat. An overfill, in contrast, occurs when there is too much water in the water compartment 210. The high water level that characterizes an overfill situation may be dangerous as rapidly heated water may spit from the spout 206 of the vessel 200, or splash against its lid 220. To detect an overfill situation, the controller 332 of the tea maker 100 may be configured to determine, during heating the water to the initial steeping temperature, an increment in the temperature of the water over a certain time interval of heating; to determine using said temperature increment, the duration of the observed time interval of heating and data regarding a specific heat capacity of water and a dissipative power of the heating element, an amount of water contained in the water compartment 210; to compare the determined amount of water to a maximum water amount-reference value; and in case the determined amount of water is greater than the maximum water amount-reference value, to stop heating the water. To detect an underfill situation, the controller 332 may similarly be configured to compare the determined volume of water to a minimum water volume-reference value; and in case the determined volume of water is smaller than the minimum water volume-reference value, to stop heating the water.

The amount of heat Q required to raise the temperature of a mass of m kilograms of water by $\Delta T$ degrees Celcius is dependent on the specific heat capacity c of water, which is about 4.18 Joule/gram°Celcius. The time $\Delta t$ it takes to heat the mass of water by $\Delta T$ degrees Celcius is furthermore dependent on the dissipative power P of the heating element used to supply the heat. Mathematically, the relation between these variables may be expressed as:

$$Q = P \cdot \Delta t = c \cdot m \cdot \Delta T \qquad\qquad (1)$$

The controller 332 of the tea maker 100 may be programmed with knowledge of the values of P and c. Using an internal timer to monitor the lapse of a representative period of heating time $\Delta t$, e.g. 10-50 seconds, and measuring the increment in water temperature $\Delta T$ that occurs during this period of heating by means of the temperature sensor, it may calculate the amount of water contained in the water compartment, either in units of mass (e.g. kilograms), units of volume (e.g. liters; obtainable from *m* by dividing it by the density of water per liter), or any other suitable unit. In the case of an overfill protection, the controller 332 may subsequently compare the calculated amount of water with a pre-programmed reference value that represents the maximum, water compartment 210-specific amount of water that can be heated and poured safely. In case it finds that the amount of water contained in the water compartment exceeds the safe maximum, it may stop the heating of the water, and notify the user. In the case of an underfill protection, the controller may subsequently compare the calculated amount of water with a pre-programmed reference value that represents a minimum, water compartment 210-specific amount of water required to operate the device safely. In case it finds that the amount of water contained in the water compartment is smaller than the safe minimum, it may switch off the heating element 222 to stop the heating of the water, and notify the user.

At the time the tea maker 100 notifies the user that that the tea filter 216 may be placed, a user may be temporarily occupied and unable to respond to the notification. To accommodate situations like these, the controller 332 may be configured to keep the water temperature close to the set initial steeping temperature during the time it awaits placement of the filter 216. That is, the controller 332 may be configured to monitor the temperature of the water in the water compartment 210, and in case it notices that the temperature drops below the set initial steeping temperature by more than a predetermined value, e.g. 3°C or 5°C, it may temporarily re-activate the heating element 222 to bring the temperature back to the initial steeping temperature. The controller 332 may preferably maintain the water temperature close to the initial steeping temperature for no more than a predetermined period of time, e.g. 5-10 minutes. If after this period no filter 216 has been placed the controller 332 may shut down the tea maker 100, so as to prevent it from heating water that appears to be forgotten.

Placement (and removal) of the tea filter 216 (step 3) may be detected by the controller 332 through the reed switch 226, which may be operated by the magnet 218 provided in or on the filter. When the controller 332 has notified the user that the tea filter 216 may be placed, and placement of the filter is subsequently detected, the controller may initiate the steeping phase of the brewing process (step 4).

To this end the controller 332 may cancel any notification that the filter 216 may be placed, and switch off the heating element 222. Then it may count the steeping time associated with the selected brewing program. When the steeping time has elapsed, it may notify the user that the tea has been brewed and is ready for consumption (step 5).

As described, some teas, such as black tea, may have a relatively high optimal steeping temperature, e.g. around 90-100°C. A consequence of such high steeping temperatures is that the freshly brewed tea, at the end of the steeping phase, may be relatively hot, and often too warm to drink comfortably. To promote the ready drinkability of freshly brewed tea, the controller 332 of the tea maker 100 may preferably be configured not to heat the water during steeping. That is, from the point that the tea filter 216 is inserted into the water compartment 210, and steeping of the tea commences, the controller 332 may preferably refrain from heating the water, at least until the predetermined steeping time has lapsed. This allows the water to cool slightly during steeping, just like during traditional tea brewing, such that, at the end of the steeping phase, the brewed tea has a temperature that is at, or at least closer to, a safe and pleasant drinking temperature. Another benefit of refraining from heating during the steeping phase is that sugary content of the tea will not caramelize against heated parts of the tea maker 100, such as the partition 208. The controller 332 may, of course, be configured to maintain the water in the water compartment 210 at a suitable drinking temperature, for example in the range of 60-70°C, once the steeping phase has ended.

During the tea brewing process, the tea maker 100 may issue notifications to notify a user of a variety of events, as described. It is understood that these notifications may generally be given in any suitable way, including suitably lighting any of symbols 364,366 on the user interface panel 360, and/or generating sounds through the loudspeaker 330. In addition, notifications may be given by means of the brewing progress indicator 368. By way of example, possible uses of the brewing progress indicator 368 for issuing notifications will now be described in some more detail.

As its name implies, the brewing process indicator 368 may be used primarily to inform the user of any progress in the tea brewing process. In this respect, it may notify a user that certain steps or stages of the brewing process have been reached and or (partly) completed. The operation of the brewing process indicator 368 may be controlled by the controller 332, which to this end may be configured to control the first illumination means 322 according to an illumination notification pattern stored in the controller 332. A notification pattern may comprise a sequence or arrangement of different activities, such as activating and/or deactivating one or more first illumination means 322, increasing and/or decreasing the light intensity of one or more first illumination means, blinking of one or more illumination means during a predetermined time period with a predetermined frequency and setting a light emitting color of one or more first illumination means. Although one notification pattern may be used for all brewing programs, some embodiments may allow a notification pattern to be uniquely associated with a certain brewing program or tea type. In general, each of the first illumination means 322 may be individually controlled by the controller 332 in accordance with the prescriptions of the notification pattern.

To inform the user of any progress in the tea brewing process, the notification pattern may prescribe that the brewing progress indicator 168 is gradually illuminated or filled with light, for example by successively turning on adjacent first illumination means 322 so as to form a gradually extending string of light. At the start of the brewing process, the progress indicator 368 may thus not be illuminated, whereas at the point of completion of the brewing process, the progress indicator 368 may be illuminated completely (forming an illuminated ring). The notification pattern may prescribe that the brewing progress indicator 368 is to be illuminated in one color or in multiple colors (if provided for by the first illumination means 322), for example to form a multi-colored arc starting in green and ending in red.

In addition to its basic function of indicating brewing progress by having an indicative or proportional portion of its length illuminated, the brewing progress indicator 368 may also be used to notify the user of certain events or to provide him with information about the status of the tea maker 100.

For instance, at the start of the tea brewing process, the water in the vessel 200 is heated to a predetermined initial steeping temperature. The notification pattern may prescribe that the first illumination means 322 are to reflect the changing temperature of the water during this heating phase. Accordingly, the first illumination means may for example be controlled such that their color changes, for instance from blue when the water is cold, to red when the water is hot. Alternatively or in addition, the first illumination means 322 may be controlled to blink during the heating period with a predetermined frequency that depends on the water temperature. The first illumination means may for example blink at a low frequency when the water is cold, and at a high frequency when the water is hot. According to yet another alternative, the light intensity of the light emitted by the first illumination means 322 may be varied, from a low intensity when the water is cold, to a high intensity when the water is hot.

In another embodiment, the brewing process indicator 368 may be used to notify the user of filter placement (step 3 of the brewing process). For instance by periodically or continuously changing the color of the light that fills the brewing progress indicator 368, the user may be made aware of the fact that the tea filter 216 may be inserted. Alternatively, the first illumination means 322 of the progress indicator 368 may be controlled such that they start blinking. To avoid confusion, the controller 332 may control the first illumination means 322 such that the blinking frequency differs from the blinking frequency that is coupled to another notification that may be issued. Once the tea filter 216 has been placed, the brewing progress indicator 368 may continue to show the progress of the tea brewing process in the regular fashion.

In yet another embodiment, the brewing progress indicator 368 may be used to notify the user of the fact that tea is ready for consumption. Such a notification may, of course, be provided by the fact that the progress indicator 368 is completely filled with light, but again, notification pattern may additionally prescribe that the first illumination means 322 are controlled such they start blinking, for example by gradually fade in and out, or execute any other lighting variation mentioned above.

Apart from notifying the user of progress in the brewing process, e.g. that certain steps or stages have been reached, the progress indicator 368 may also be used to inform the user of information regarding the status of the tea maker 100. The controller 332 may, for example, be preprogrammed such that certain situations that may occur when using the tea maker 100 may initiate a notification. In case of the underfill situation of the overfill situation as described above, the tea maker 100, or at least the heating element 222, may be automatically switched off to prevent damage of the tea maker 100 or to prevent the occurrence of unsafe situations. Then, the user may be informed accordingly, for instance by means of a sound generated by the loudspeaker 330 and/or by means of the brewing progress indicator 368. Therefore, the controller 332 may control the first illumination means 322 to execute any of the aforementioned lighting variations. The brewing progress indicator 368 may also be used to periodically notify the user that the tea maker 100 needs to be cleaned or descaled.

With regard to the terminology used in this text the following is noted. The word 'tea' is generally used loosely to describe beverages made with the leaves of a plant. Accordingly, the word 'tea' not only refers to beverages prepared from the plant *Camellia sinensis*, but also intends to cover tisanes, herbal infusions and the like.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

**Claims**

1.    A tea maker (100), comprising:

   - a water compartment (210);
   - a tea filter (216) that is at least partly insertable into the water compartment;
   - a heating element (222), configured to heat water contained in said water compartment;
   - a temperature sensor (224), configured to generate a reference signal reflecting a temperature of the water contained in said water compartment;
   - a tea filter presence sensor (218, 226), configured to detect insertion of the tea filter into the water compartment;
   - user notification means (322, 324, 330);
   - a controller (332), operably connected to the heating element (222), the temperature sensor (224), the tea filter presence sensor (226) and the notification means, and configured
   * to heat water contained in the water compartment in accordance with a predetermined temperature/time profile that is at least partly defined by an initial steeping temperature;
   * to detect whether the water has been heated to the initial steeping temperature in accordance with the predetermined temperature/time profile;
   * to notify a user by means of the notification means that the water has been heated to the initial steeping temperature, and that steeping may be initiated by insertion of the tea filter; and
   * once the user has been notified to insert the filter, to maintain the temperature of the water within a certain range of the initial steeping temperature until either a certain waiting period lapses, or insertion of the tea filter is detected by means of said tea filter presence sensor within said waiting period.

2.    The tea maker according to claim 1, wherein the range within which the controller (332) is configured to maintain the temperature of the water once it has reached the initial steeping temperature is the initial steeping temperature ± 5 °C.

3.    The tea maker according to claim 1 or 2, wherein the waiting period during which the controller (332) is configured to maintain the temperature of the water within a certain range of the initial steeping temperature, is no more than 60, and preferably no more than 30 minutes.

4.    The tea maker according to any of the claims 1-3, wherein the controller (332) is further configured to shutdown the tea maker when the waiting period has elapsed without prior detection of insertion of the tea filter.

5.    The tea maker according to any of the claims 1-4, wherein the controller (332) is further configured:

   - to determine, during heating the water to the initial steeping temperature, an increment in the temperature of the water over a certain time interval of heating;

- to determine using said temperature increment, the duration of the observed time interval of heating and data regarding a specific heat capacity and a dissipative power of the heating element, an amount of water contained in the water compartment (210);
- to compare the determined amount of water to a maximum water amount-reference value; and
- in case the determined amount of water is greater than the maximum water amount-reference value, to stop heating the water.

6. The tea maker according to any of the claims 1-5, wherein the controller (332) is further configured:

- to determine, during heating the water to the initial steeping temperature, an increment in the temperature of the water over a certain time interval of heating;
- to determine using said temperature increment, the duration of the observed time interval of heating and data regarding a specific heat capacity and a dissipative power of the heating element, an amount of water contained in the water compartment (210);
- to compare the determined volume of water to a minimum water volume-reference value; and
- in case the determined volume of water is smaller than the minimum water volume-reference value, to stop heating the water.

7. The tea maker according to any of the claims 1-6 wherein the temperature/time profile includes a period of boiling the water prior to reaching the initial steeping temperature, such that the controller (332), in executing said temperature/time profile, is configured to

- to heat the water to its boiling point, before notifying a user that the water has been heated to the initial steeping temperature.

8. The tea maker according to any of the claims 1-7, wherein the controller (332), upon detection of insertion of the tea filter (216) in the water compartment (210), is configured to count a predetermined steeping time and, upon expiry thereof, to control the notification means to notify the user that steeping has been completed and the tea is ready for consumption.

9. The tea maker according to any of the claims 1-8, wherein the tea filter presence sensor includes a magnet (218), connected to the tea filter (216), and a reed switch (226), disposed in or adjacent the water compartment (210).

10. The tea maker according to any of the claims 8-9, wherein the controller (332) is configured not to heat the water in the water compartment (210) during counting of said steeping time.

Fig. 1

Fig. 2

Fig. 3

357
358
356
354
352

320    324   326   324

Fig. 4A

358
356
354
352

372
372

320    353    328    353

Fig. 4B

| A | B | C |
|---|---|---|

FIG. 5

FIG. 6

Europäisches
Patentamt

European
Patent Office

Office européen
des brevets

# EUROPEAN SEARCH REPORT

Application Number

EP 10 18 9066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/018403 A1 (HOARE RICHARD [AU] ET AL) 28 January 2010 (2010-01-28) * paragraph [0029]; figure 2 * | 1-10 | INV. A47J31/20 |
| A | US 6 964 222 B1 (TUCKER GEORGE H [US]) 15 November 2005 (2005-11-15) * column 2, line 63; figure 2A * * column 3, lines 8,9,15,51,52,63 * | 1 | |
| A | US 2005/150391 A1 (SCHIFFERLE RENE [CH] SCHMED ARTHUR [CH] ET AL) 14 July 2005 (2005-07-14) * paragraph [0019]; figure 1 * | 1 | |
| A | DE 35 03 054 A1 (BENTZ & SOHN MELITTA [DE]) 31 July 1986 (1986-07-31) * page 8, line 4; figures 3,4 * | 1 | |
| A | US 2007/151457 A1 (RABIN MICHELLE [US] ET AL) 5 July 2007 (2007-07-05) * abstract * | 1 | |
| A | WO 2007/142735 A1 (SUNBEAM PRODUCTS INC [US]) 13 December 2007 (2007-12-13) * figure 6B * | 1 | TECHNICAL FIELDS SEARCHED (IPC) A47J A23F |
| A | US 6 135 010 A (HUSTED ROYCE HILL [US] ET AL) 24 October 2000 (2000-10-24) * column 4, lines 18,19; figures 2,4,7 * | 1 | |
| A | US 2006/124628 A1 (LONG TOM [US] ET AL LONG TOM [US] ET AL) 15 June 2006 (2006-06-15) * figures 1,3 * | 1 | |
| A | US 6 276 262 B1 (CHEN JASON C S [US]) 21 August 2001 (2001-08-21) * figure 2 * | 1 | |

-/--

The present search report has been drawn up for all claims

| Place of search | Date of completion of the search | Examiner |
|---|---|---|
| The Hague | 8 April 2011 | Visser, Rogier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 10 18 9066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 231 918 A (GRZYWNA STANLEY E [US]) 3 August 1993 (1993-08-03) * figures 2B,10A * | 1 | |
| A | GB 2 203 029 A (JENKINSON ROBIN ARTHUR; PARKER JOHN BARRIE) 12 October 1988 (1988-10-12) * page 5, lines 15,22,32; figure 2 * | 1 | |
| A | US 2010/233338 A1 (GARCIA JORGE B [US] ET AL) 16 September 2010 (2010-09-16) * paragraph [0045] * | 1 | |

TECHNICAL FIELDS
SEARCHED      (IPC)

The present search report has been drawn up for all claims

| Place of search | Date of completion of the search | Examiner |
|---|---|---|
| The Hague | 8 April 2011 | Visser, Rogier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 10 18 9066

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2011

| Patent document cited in search report | | Publication date | Patent family member(s) | | Publication date |
|---|---|---|---|---|---|
| US 2010018403 | A1 | 28-01-2010 | WO 2008049163 A1<br>AU 2007308748 A1<br>CN 101557741 A<br>EP 2079348 A1<br>JP 2010507411 T | | 02-05-2008<br>02-05-2008<br>14-10-2009<br>22-07-2009<br>11-03-2010 |
| US 6964222 | B1 | 15-11-2005 | NONE | | |
| US 2005150391 | A1 | 14-07-2005 | AR 047419 A1<br>AU 2005200116 A1<br>BR PI0500073 A<br>CA 2492307 A1<br>CN 1640349 A<br>DE 102004002004 A1<br>DE 202005021323 U1<br>EP 1554958 A2<br>JP 2005199070 A<br>KR 20050074908 A<br>MX PA05000544 A<br>NZ 537676 A<br>RU 2286076 C2<br>SG 113574 A1<br>ZA 200500321 A | | 18-01-2006<br>28-07-2005<br>06-09-2005<br>14-07-2005<br>20-07-2005<br>11-08-2005<br>23-08-2007<br>20-07-2005<br>28-07-2005<br>19-07-2005<br>15-07-2005<br>30-06-2006<br>27-10-2006<br>29-08-2005<br>19-07-2005 |
| DE 3503054 | A1 | 31-07-1986 | NONE | | |
| US 2007151457 | A1 | 05-07-2007 | NONE | | |
| WO 2007142735 | A1 | 13-12-2007 | US 2007283815 A1<br>US 2007283816 A1 | | 13-12-2007<br>13-12-2007 |
| US 6135010 | A | 24-10-2000 | NONE | | |
| US 2006124628 | A1 | 15-06-2006 | US 2007278202 A1 | | 06-12-2007 |
| US 6276262 | B1 | 21-08-2001 | NONE | | |
| US 5231918 | A | 03-08-1993 | NONE | | |
| GB 2203029 | A | 12-10-1988 | NONE | | |
| US 2010233338 | A1 | 16-09-2010 | CA 2727380 A1<br>GB 2473985 A<br>WO 2010105205 A1 | | 16-09-2010<br>30-03-2011<br>16-09-2010 |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2009109011 A1